# EUROPEAN PATENT APPLICATION

(11) **EP 3 952 595 A1**
(43) Date of publication of application: **09.02.2022**
(21) Application number: 19922950.1
(22) Date of filing: 05.04.2019
(51) Int. Cl.: H04W 76/10, H04W 16/32, H04W 72/04

(54) **USER EQUIPMENT**

(71) Applicant: NTT DOCOMO, INC., Chiyoda-Ku Tokyo 100-6150 (JP)
(72) Inventor: UCHINO Tooru, Tokyo 100-6150 (JP); TAKAHASHI Hideaki, Tokyo 100-6150 (JP); HANAKI Akihito, Tokyo 100-6150 (JP); OU Hiroshi, Tokyo 100-6150 (JP)
(74) Representative: Hoffmann Eitle
(86) International application number: PCT/JP2019/015233
(87) International publication number: WO 2020/202581

(57) **Abstract**

A user equipment (UE) transmits, to a gNB, a connection request to the gNB different from an eNB to which the UE is connected. The UE detects rejection of the connection request by the gNB based on a time elapsed from a timing at which the connection request is transmitted, or reception of a rejection response from the gNB to the connection request.

## Description

### Technical Field

The present invention relates to a user equipment.

### Background Art

The 3rd Generation Partnership Project (3GPP) specifies Long Term Evolution (LTE) and specifies LTE-Advanced (hereinafter, collectively referred to as LTE) for the purpose of further increasing the speed of LTE. Moreover, in the 3GPP, specification of a succeeding system of the LTE called 5G New Radio (NR) or Next Generation (NG) has been considered.

Further, Multi-Radio Dual Connectivity (MR-DC), in which a User Equipment (UE) is simultaneously connected to a plurality of nodes (radio base stations) that use different Radio Access Technologies (RAT), specifically, a Master Node (MN) and a Secondary Node (SN), is defined in the 3GPP (see Non Patent Literature 1).

When configuring the MR-DC, the UE first establishes connection with a desired node in a radio resource control layer (RRC layer) to be in a connection state (RRC Connected). Thereafter, a network transmits an instruction signal (for example, RRC Connection Reconfiguration) to the UE via a master cell group (MCG) in which the desired node (corresponding to the MN) is included, and configures a secondary cell group (SCG) including the SN for the UE.

Similarly, when releasing the MR-DC, the network releases the SCG (SN) configured for the UE by transmitting an instruction signal to the UE via the MCG.

### Citation List

### Non Patent Literature

Non Patent Literature 1: 3GPP TS 37.340 V15.4.0, 3rd Generation Partnership Project; Technical Specification Group Radio Access Network; Evolved Universal Terrestrial Radio Access (E-UTRA) and NR; Multi-connectivity; Stage 2 (Release 15), 3GPP, December 2018

### Summary of Invention

However, the above-described procedure for adding and releasing the SCG (SN) in the MR-DC has the following problems.

Specifically, in MR-DC configuration and release, transmission and reception of an instruction signal (RRC Connection Reconfiguration or the like) to and from the UE via the MCG (MN) is essential, and thus there is concern that an amount of signaling in the RRC layer for the MCG is increased.

When the amount of signaling in the RRC layer for the MCG is increased, transmission and reception of other user plane signals that are not related to the MR-DC are adversely affected, and as a result, performance of a radio access network (RAN) for the MCG deteriorates.

For example, in a case of E-UTRA-NR Dual Connectivity (EN-DC), since an instruction signal related to the MR-DC is transmitted and received to and from the E-UTRA (LTE), a data rate of the UE that is being connected to the E-UTRA may be decreased.

In order to solve such a problem, the UE may directly transmit a connection request to the SN without going through the MCG. However, the SN may reject the connection request due to a resource shortage or the like.

In this regard, the present invention has been made in view of such a situation, and an object of the present invention is to provide a user equipment capable of continuing connection processing with a new node such as a secondary node even when a connection request directly transmitted to the new node is rejected.

An aspect of the present invention is a user equipment (UE 200) including: a transmitting unit (transmitting unit 210); a receiving unit (receiving unit 220); and a control unit (control unit 230), wherein the control unit starts connection to a second node (gNB 100B) different from a first node (eNB 100A) to which the user equipment is connected, in response to transmission, to the second node, of a connection request to the second node by the transmitting unit, or reception of the connection request from the second node by the receiving unit.

An aspect of the present invention is a user equipment (UE 200) including: a transmitting unit (transmitting unit 210); a receiving unit (receiving unit 220); and a control unit (control unit 230), wherein the transmitting unit transmits, to a second node (gNB 100B), a connection request to the second node different from a first node (eNB 100A) to which the user equipment is connected, and the control unit detects rejection of the connection request by the second node based on a time elapsed from a timing at which the connection request is transmitted, or reception of a rejection response to the connection request, the rejection response being received from the second node by the receiving unit.

### Brief Description of Drawings

Fig. 1 is a diagram illustrating an overall schematic configuration of a radio communication system 10.
Fig. 2 is a diagram illustrating a functional block configuration of a User Equipment (UE) 200.
Fig. 3 is a diagram illustrating a functional block configuration of a gNB 100B.
Fig. 4 is a diagram illustrating a communication sequence related to addition of a Secondary Cell Group (SCG) on the initiative of the UE 200.
Fig. 5 is a diagram illustrating a conventional communication sequence related to addition of an SCG (Secondary Node (SN)) at the start of E-UTRA-NR Dual Connectivity (EN-DC).
Fig. 6 is a diagram illustrating an overall operation flow of the UE 200 that is related to addition of an SCG (SN).
Fig. 7 is a diagram illustrating a connection request acceptance determination processing flow (Operation Example 1) of the UE 200.
Fig. 8 is a diagram illustrating a connection request acceptance determination processing flow (Operation Example 2) of the UE 200.
Fig. 9 is a diagram illustrating a communication sequence related to addition of an SCG on the initiative of a network.
Fig. 10 is a diagram illustrating an overall operation flow of the UE 200 that is related to addition of an SCG (SN) on the initiative of a network.
Fig. 11 is a diagram illustrating an example of a hardware configuration of an eNB 100A, the gNB 100B, and the UE 200.

### Description of Embodiments

Hereinafter, embodiments will be described with reference to the drawings. The same functions and configurations are denoted by the same or similar reference numerals, and a description thereof will be omitted as appropriate.

### (1) Overall Schematic Configuration of Radio

### Communication System

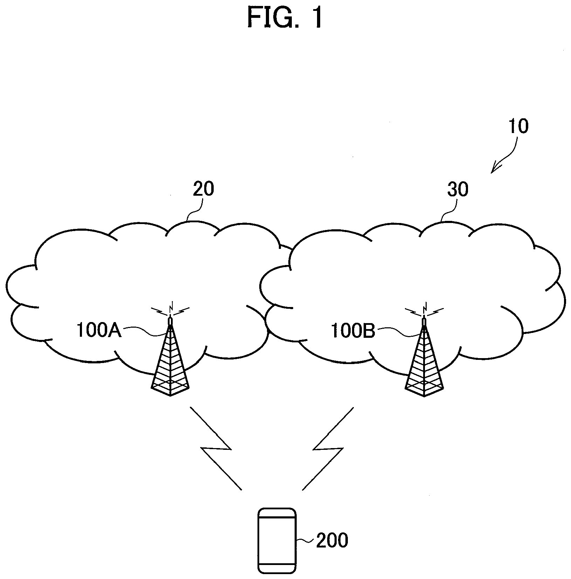

Fig. 1 is a diagram illustrating an overall schematic configuration of a radio communication system 10 according to the present embodiment. The radio communication system 10 is a radio communication system according to Long Term Evolution (LTE) and 5G New Radio (NR). Note that the LTE may also be referred to as 4G, and NR may also be referred to as 5G.

The radio communication system 10 includes an Evolved Universal Terrestrial Radio Access Network 20 (hereinafter, referred to as E-UTRAN 20) and a Next Generation-Radio Access Network 30 (hereinafter, referred to as NG RAN 30). Further, the radio communication system 10 includes a user equipment 200 (hereinafter referred to as UE 200).

The E-UTRAN 20 includes an eNB 100A that is a radio base station according to the LTE. The NG RAN 30 includes a gNB 100B that is a radio base station according to the 5G (NR). Note that the E-UTRAN 20 and the NG RAN 30 (or the eNB 100A or the gNB 100B) may be simply referred to as a network.

The eNB 100A, the gNB 100B, and the UE 200 can support Carrier Aggregation (CA) using a plurality of Component Carriers (CC), Dual Connectivity (DC) in which component carriers are simultaneously transmitted between a plurality of NG-RAN nodes and the UE, and the like.

The eNB 100A, the gNB 100B, and the UE 200 perform radio communication by using a radio bearer, specifically, an SRB Signalling Radio Bearer (SRB) or a DRB Data Radio Bearer (DRB).

In the present embodiment, Multi-Radio Dual Connectivity (MR-DC) in which the eNB 100A constitutes a Master Node (MN) and the gNB 100B constitutes a Secondary Node (SN), specifically, E-UTRA-NR Dual Connectivity (EN-DC) is performed. In the present embodiment, the eNB 100A constitutes a first node and the gNB 100B constitutes a second node.

That is, the UE 200 supports dual connectivity in which the UE 200 is connected to the first node (eNB 100A) and the second node (gNB 100B).

The eNB 100A is included in a Master Cell Group (MCG), and the gNB 100B is included in a Secondary Cell Group (SCG). That is, the gNB 100B is an SN included in the SCG.

In the present embodiment, resources of the MCG are not used in an SCG (SN) addition procedure performed for the UE 200 to start the MR-DC (EN-DC). Specifically, selection and elimination of an SCG cell are performed without using a signal of a Radio Resource Control layer (RRC layer) for the MCG.

### (2) Functional Block Configuration of Radio Communication System

Next, a functional block configuration of the radio communication system 10 will be described. Specifically, a functional block configuration of the gNB 100B and the UE 200 will be described. For convenience of explanation, the functional block configuration of the UE 200 will be described first.

Further, in the description of the functional block configuration, an outline of the function of each device will be described, and then details of operation of each device will be described later.

### (2.1) UE 200

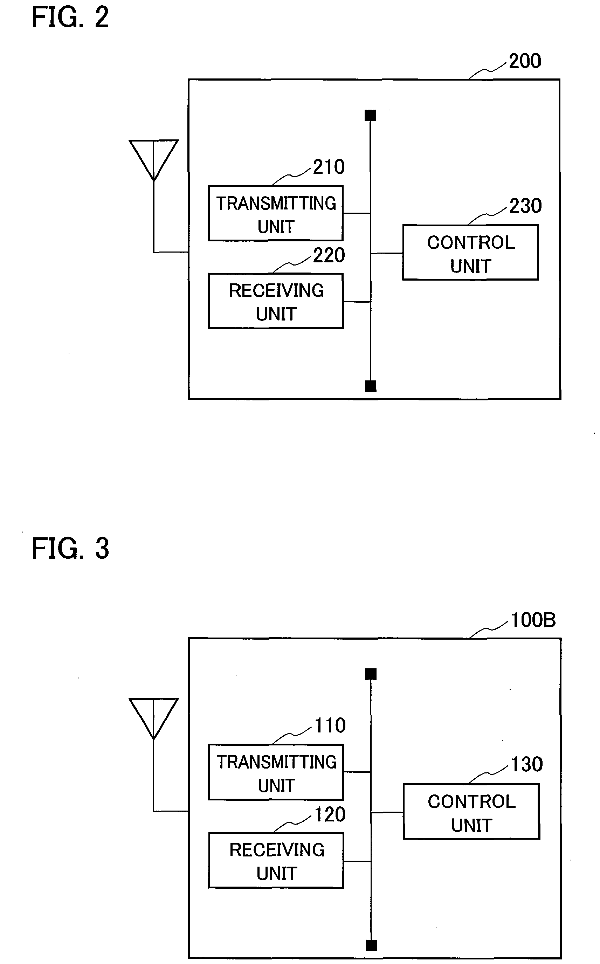

Fig. 2 is a diagram illustrating a functional block configuration of the UE 200. As illustrated in Fig. 2, the UE 200 includes a transmitting unit 210, a receiving unit 220, and a control unit 230.

The transmitting unit 210 transmits an uplink signal (UL signal) according to the LTE or the NR. In particular, in the present embodiment, with the start of the MR-DC, the transmitting unit 210 transmits, to the gNB 100B, a connection request to the gNB 100B different from the eNB 100A to which UE 200 is connected.

Further, the transmitting unit 210 can transmit, to the gNB 100B, a connection request to the gNB 100B based on a content selected by the control unit 230, specifically, a content used for connection to the gNB 100B at the time of performing the MR-DC.

The content used for connection to the gNB 100B includes a Radio Access Technology (RAT) of a connection destination cell (radio base station), a frequency (bandwidth), capability information (UE Capability) of the UE 200, and the like, and a detailed description thereof will be provided later.

In addition, in a case where the control unit 230 detects rejection of the transmitted connection request, the transmitting unit 210 can transmit a new connection request of which a content is at least partially different from that of the transmitted connection request. Note that the new connection request may be transmitted to the same gNB to which the rejected connection request is transmitted, or may be transmitted to a different gNB.

Alternatively, in a case where the control unit 230 detects the rejection of the transmitted connection request, the transmitting unit 210 can also transmit failure information indicating a failure of the gNB 100B to the eNB 100A.

The failure information may be any information that can notify a failure of the gNB 100B (SN) or the SCG, specifically, any information that can notify that the transmitted connection request is rejected. For example, the transmitting unit 210 may transmit a radio link failure (S-RLF) in a cell included in the SCG.

The receiving unit 220 receives a downlink signal (DL signal) according to the LTE or the NR. In particular, in the present embodiment, the receiving unit 220 receives a connection request from the gNB 100B.

Specifically, the receiving unit 220 receives, from the gNB 100B, a connection request to the gNB 100B (SN) accompanying the start of the MR-DC of the UE 200. That is, the connection request is transmitted from the gNB 100B to the UE 200 not on the initiative of the UE 200, but on the initiative of the network.

Further, the receiving unit 220 can monitor a predetermined resource (a frequency, a time, or the like) used to transmit the connection request from the network based on an instruction from the control unit 230.

The control unit 230 performs a control related to the UL signal transmitted by the transmitting unit 210 and the DL signal received by the receiving unit 220.

In the present embodiment, with the start of the MR-DC, the control unit 230 starts connection to the gNB 100B in response to the transmission, to the gNB 100B, of the connection request to the gNB 100B (SN) by the transmitting unit 210, the gNB 100B (SN) being different from the eNB 100A (MN) to which the UE 200 is connected.

Alternatively, with the start of the MR-DC, the control unit 230 starts connection to the gNB 100B in response to the reception of the connection request from the gNB 100B (SN) (that is, on the initiative of the network) by the receiving unit 220, the gNB 100B (SN) being different from the eNB 100A (MN) to which the UE 200 is connected.

Specifically, the control unit 230 performs connection processing between the UE 200 and the gNB 100B, and establishes RRC layer connection or the like.

Further, the control unit 230 selects the content used for connection to the gNB 100B. As described above, the content includes a Radio Access Technology (RAT) of a connection destination cell (radio base station), a frequency (bandwidth), capability information (UE Capability) of the UE 200, or the like, and a procedure for connection to the gNB 100B using the content will be described later.

In a case where the connection request to the gNB 100B is transmitted from the network on the initiative of the network, the control unit 230 can cause the receiving unit 220 to monitor a predetermined resource (a frequency, a time, or the like) used to transmit the connection request from the gNB 100B.

Furthermore, the control unit 230 can start connection to the gNB 100B when the receiving unit 220 receives a connection request from the gNB 100B (network) using the predetermined resource.

In addition, the control unit 230 can detect rejection of the connection request to the gNB 100B by the gNB 100B based on a time elapsed from a timing at which the connection request to the gNB 100B is transmitted by the transmitting unit 210.

Further, the control unit 230 can detect rejection of the connection request by the gNB 100B based on reception of a rejection response to the connection request to the gNB 100B transmitted by the transmitting unit 210, the rejection response being received by the receiving unit 220 from the gNB 100B.

### (2.2) gNB 100B

Fig. 3 is a diagram illustrating a functional block configuration of the gNB 100B. As illustrated in Fig. 3, the gNB 100B includes a transmitting unit 110, a receiving unit 120, and a control unit 130. Note that the eNB 100A also has a configuration substantially similar to that of the gNB 100B except that a communication method is different.

The transmitting unit 110 transmits a DL signal according to the NR. Particularly, in the present embodiment, in a case where a connection request between the UE 200 and the gNB 100B (SN) accompanying the start of the MR-DC is transmitted from the network on the initiative of the network, the transmitting unit 110 transmits the connection request to the UE 200.

Further, the transmitting unit 110 can also transmit an instruction to the UE 200 to monitor reception of the connection request. In addition, in a case where the connection request to the gNB 100B (SN) transmitted from the UE 200 cannot be accepted due to a lack of resources or the like, the transmitting unit 110 can transmit, to the UE 200, a rejection response indicating that the connection request cannot be accepted.

The receiving unit 120 receives a UL signal according to the NR. In particular, in the present embodiment, the receiving unit 120 receives the connection request to the gNB 100B (SN) transmitted from the UE 200.

The control unit 130 performs a control related to the UL signal transmitted by the transmitting unit 110 and the DL signal received by the receiving unit 120.

In particular, in the present embodiment, the control unit 130 performs a control related to transmission of the connection request to the gNB 100B (SN) by the transmitting unit 110 and a control related to reception of the connection request to the gNB 100B (SN) by the receiving unit 120.

Specifically, the control unit 130 starts connection to the UE 200 in response to the transmission of the connection request to the gNB 100B (SN) to the UE 200 or the reception of the connection request to the gNB 100B (SN) from the UE 200.

More specifically, the control unit 130 performs connection processing between the UE 200 and the gNB 100B, and establishes RRC layer connection or the like.

### (3) Operation of Radio Communication System

Next, the operation of the radio communication system 10 will be described. Specifically, an SCG addition operation accompanying the start of the MR-DC (EN-DC) on the initiative of the UE 200 and an SCG addition operation accompanying the start of the MR-DC (EN-DC) on the initiative of the network will be described.

As described above, in the present embodiment, the resources of the MCG (LTE) are not used in an SCG and SCG cell (SN) addition procedure performed for the UE 200 to start the MR-DC (EN-DC). That is, an instruction signal related to the connection request to the gNB 100B (SN) is transmitted and received only within the NG RAN 30.

### (3.1) Addition of SCG on the Initiative of UE 200

In a case of adding an SCG on the initiative of the UE 200, the connection request to the gNB 100B (SN) is transmitted from the UE 200 to the gNB 100B. Hereinafter, a related communication sequence and operation flow of the UE 200 will be described.

### (3.1.1) Communication Sequence

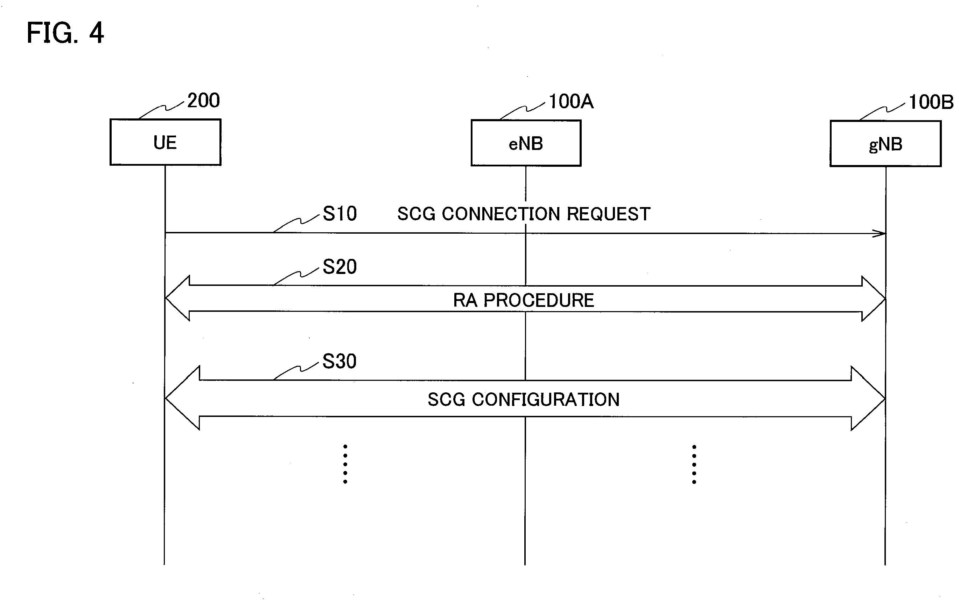

Fig. 4 is a diagram illustrating a communication sequence related to the addition of an SCG on the initiative of the UE 200. As illustrated in Fig. 4, with the start of the MR-DC, the UE 200 transmits a connection request (SCG connection request in the figure) to the gNB 100B in order to add an SCG (SN) (S10). Here, it is assumed that the gNB 100B is selected as the SN. A method of selecting an SN (SCG cell) will be described later.

When the gNB 100B accepts the SCG connection request, the UE 200 and the gNB 100B perform a random access procedure (RA procedure) (S20). Note that the RA procedure is the same as that defined in 3GPP TS 38.300, TS 38.321, and the like.

Once the RA procedure is completed, the UE 200 and the gNB 100B perform configuration of the SCG (S30). Specifically, the UE 200 and the gNB 100B perform establishment of connection (RRC Connection) in the RRC layer, and the like.

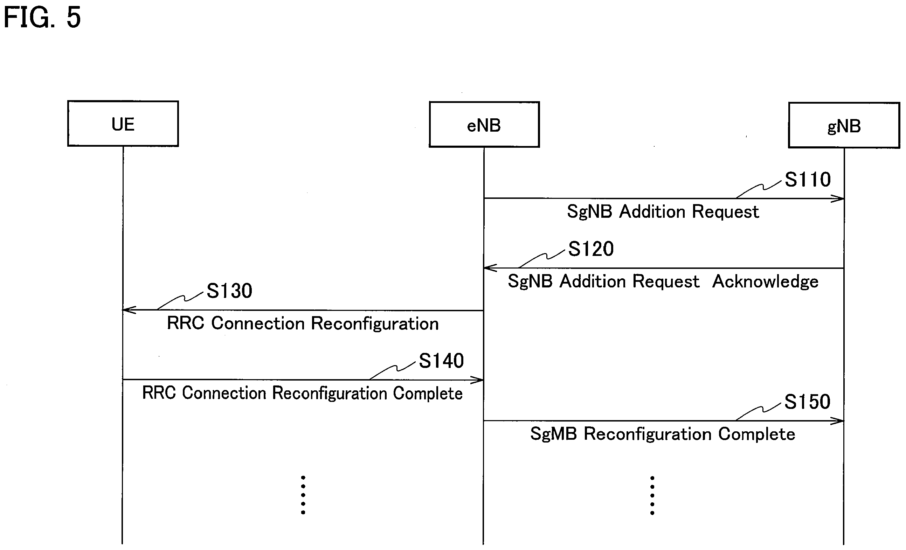

As such, the MCG (eNB 100A) is not involved at all in the addition of an SCG. Here, Fig. 5 illustrates a conventional communication sequence related to the addition of an SCG (SN) at the start of the EN-DC. The communication sequence is defined in 3GPP TS 37.340.

As illustrated in Fig. 5, the eNB (MN) transmits a request for addition of an SN (SgNB) to the gNB, and receives an acknowledgment response to the request from the gNB (S110 and S120).

In response to the reception of the acknowledgement response from the gNB, the eNB transmits, to the UE, a request for a configuration change in the RRC layer, specifically, RRC Connection Reconfiguration (instruction signal), and receives, from the UE, a completion response to the configuration change request, specifically, RRC Connection Reconfiguration Complete (S130 and S140).

Further, in response to the reception of the completion response, the eNB transmits, to the gNB, a completion report indicating that the configuration change related to the addition of an SN (SgNB) is completed (S150).

As such, in the conventional communication sequence related to the addition of an SCG (SN), the resources of the MCG (eNB) are frequently used.

### (3.1.2) Operation Flow of UE 200

Next, an operation flow of the UE 200 that is related to the addition of an SCG (SN) will be described.

### (3.1.2.1) Overall Operation Flow

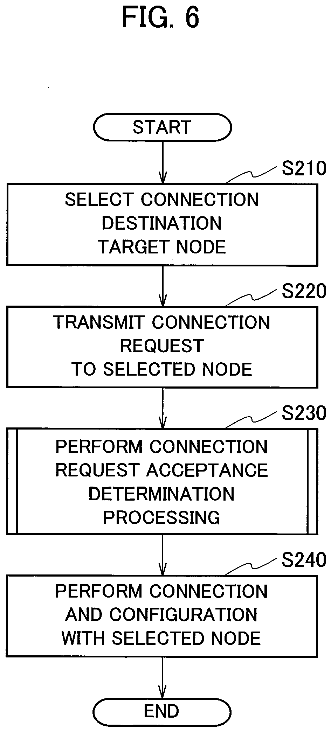

Fig. 6 is a diagram illustrating an overall operation flow of the UE 200 that is related to the addition of an SCG (SN). As illustrated in Fig. 6, the UE 200 selects a connection destination target node, specifically, a candidate node for the SN (S210).

The UE 200 selects a target SCG cell (for example, SpCell), but may also select a candidate cell (including a frequency) for the SN based on any one or a combination of the following criteria.

- Following a method of selecting a cell in an RRC IDLE state or an INACTIVE state of the UE 200
- An RAT or a frequency (bandwidth) of a cell
- A frequency/cell of the MCG and UE capability such as band combinations supported by the UE 200
- Cell quality or numerology

Note that examples of the cell quality include Channel State Information (CSI), Signal-to-Interference plus Noise power Ratio (SINR), Signal to Noise Ratio (SNR), Reference Signal Received Power (RSRP), and Reference Signal Received Quality (RSRQ). Further, the numerology is defined in 3GPP TS 38.300 and corresponds to one subcarrier spacing in a frequency domain.

- QoS of data transmitted and received by the UE 200
- A frequency/cell congestion level

Note that the "congestion level" or "Physical Resource Block (PRB) usage" may be broadcasted by broadcast information, or the congestion level may be determined based on a signal intensity or an amount of interference of the frequency.

Further, an SN (gNB), a frequency, a cell, a bandwidth part (BWP), and a beam (for example, an SS/PBCH block (SSB), a CSI-RS, and a Transmission Configuration Indication (TCI)) selected by the UE 200 may be preliminarily restricted by the network.

Note that such a restriction instruction may be performed in a state in which the MR-DC is not performed, or may be performed at the time of initial MR-DC configuration. Alternatively, the instruction may be performed in the RRC IDLE state or the INACTIVE state of the UE 200.

Further, an SN (gNB), a frequency, a cell, a BWP, and a beam selected by the UE 200 may be given priority in advance by the network.

The UE 200 selects a target node based on such criteria, and transmits a connection request (SCG connection request) to the selected node (gNB 100B) (S220).

Specifically, the UE 200 can make a connection request with respect to the node (gNB 100B) selected by the following method.

- Transmitting an SCG connection request message in UL For example, RRC (SRB3 or the like), a Medium Access Control Element (MAC CE), and a physical layer (L1) signal can be used.
- Performing the RA procedure (or scheduling request) for the SN and transmitting an identifier of the UE 200 (the identifier is implicitly equivalent to the connection request)

Note that a Cell Radio Network Temporary Identifier (C-RNTI), an International Mobile Subscriber Identity (IMSI), an International Mobile Equipment Identity (IMEI), a Network Slice Selection Assistance Information (NSSAI), or the like can be used as the identifier of the UE 200.

Further, resources for the RA procedure (for example, a frequency, a time, and a random access preamble) may be individually allocated in advance. In this case, the RA procedure becomes a contention-free RA procedure.

A timing at which the UE 200 is connected to the SN, that is, a timing at which the connection request is transmitted may be any of the following.

- A case where a frequency/cell/BWP that satisfies the above selection criteria is found

For example, a case where when an SN is selected based on a measurement of cell quality performed by the UE 200, the measurement is configured by the SN and a measurement result based on a content of the measurement configuration satisfies the selection criteria.

- Generation of UL data or reception of DL data
- Generation of UL data or reception of DL data in a specific QoS flow
- Generation of UL data or reception of DL data in a specific communication service (for example, playback of a motion picture) (which is detected by cooperation with Deep Packet Inspection (DPI) or an Operating System (OS).
- A case where an expected amount of data or communication speed exceeds or is exceeding a threshold

For example, "an amount of communication data to be generated" can be estimated and judged by using a content-size of an HTTP header, a connection destination host, a URL, a process in which a socket is started, and information regarding a socket API itself.

- Change of transmission power of the UE 200

For detection of the change, power headroom and a maximum value (instantaneous or average) of transmission power can be used. Alternatively, the change may be detected in a unit of Component Carrier (CC), UL carrier, or BWP, and when there are a plurality of targets, the sum or average of the plurality of targets may be used.

- Detecting an internal state change of the UE 200

For example, a remaining battery power level, a temperature of the device (UE 200), a load of processing other than (or including) communication, and a human body distance (may be a back-off value for satisfying the SAR) can be detected.

- Periodic trigger (for example, once every 10 seconds) Further, the UE 200 may notify the SN of the following information together with the connection request.

- Identification information of the MCG (MN) (for example, E-UTRAN Cell Global Identifier (E-CGI))
- Quality information of connected cells and neighboring cells (for example, measurement reports, CSI, and PHR)
- An identifier of a connected SCG cell (SN) or related resource (for example, a cell ID, a BWP ID, a serving cell identifier (ServCellIndex), a gNB (SN) identifier (CGI or the like), and a Public Land Mobile Network (PLMN) identifier)
- Reasons for the connection request (for example, UL data resuming, S-RLF, and the like)
- UL data retention amount (the amount of data at the time of transmission of the connection request or an estimated value of the amount of data to be generated)

Next, the UE 200 performs acceptance determination processing for determining whether or not the transmitted connection request is accepted by the network, specifically, the gNB 100B (S230).

Details of the acceptance determination processing will be described later. Here, it is assumed that the connection request is accepted.

The UE 200 performs connection and configuration with the selected node (gNB 100B) (S240). Specifically, the UE 200 performs the RA procedure with the gNB 100B, and establishes RRC Connection and the like as described above.

Specifically, the UE 200 performs connection and configuration with the gNB 100B based on a notification from the gNB 100B with respect to the transmitted connection request. Note that the notification may be transmitted on a Common Control Channel (CCCH), or may be transmitted on a Dedicated Control Channel (DCCH) or SRB (for example, SRB3).

Note that in a case of using the SRB, the SRB may be reconfigured (newly established or re-established) to make a state of Layer 2 uniform between the UE 200 and the gNB 100B (SN). Further, when the SRB is reconfigured, a default configuration may be applied.

Further, the UE 200 may notify the eNB 100A (MN) of a connection request acceptance result. In this case, based on the notification, scheduling (for example, a transmission node) of user plane data for the UE 200 may be changed.

### (3.1.2.2) Connection Request Acceptance Determination Processing Flow

Next, a connection request acceptance determination processing flow of the UE 200 will be described. The acceptance determination processing corresponds to the processing of S230 in Fig. 6.

### (3.1.2.2.1) Operation Example 1

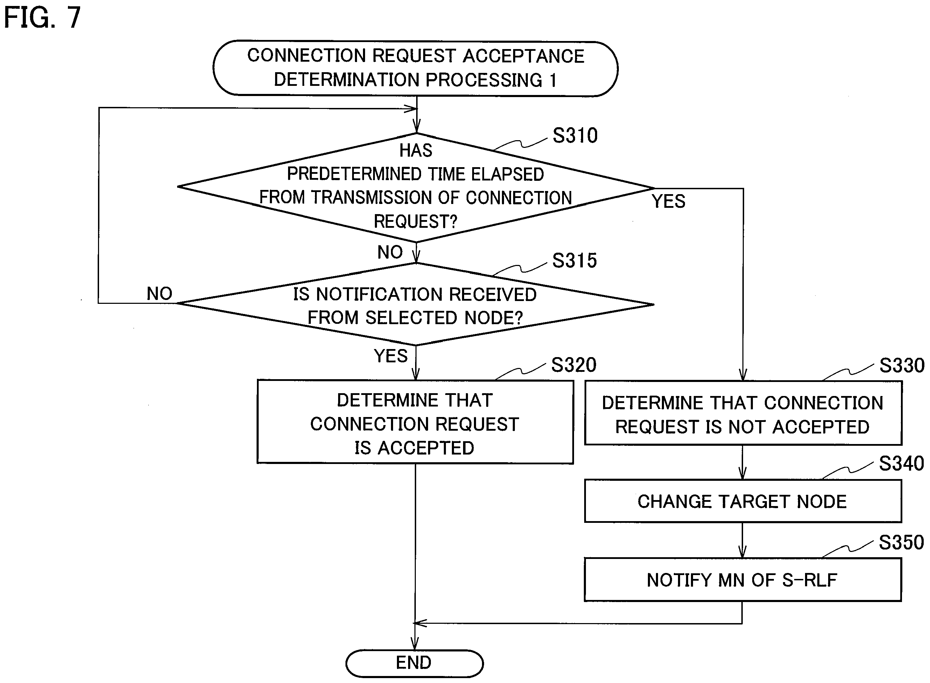

Fig. 7 illustrates a connection request acceptance determination processing flow (Operation Example 1) of the UE 200. As illustrated in Fig. 7, the UE 200 determines whether or not a predetermined time has elapsed from the transmission of the connection request (S310).

In a case where the predetermined time has not elapsed, the UE 200 determines whether or not a notification is received from the selected node, that is, the node (gNB 100B) to which the connection request is transmitted (S315).

In a case where the notification is received from the gNB 100B, the UE 200 determines that the connection request is accepted by the gNB 100B (S320).

On the other hand, in a case where the notification is not received and the predetermined time has elapsed, the UE 200 determines that the connection request is not accepted by the gNB 100B (S330).

As described above, the gNB 100B may reject the connection request due to tightness of the radio resources, a lack of resources of the node, or the like, which corresponds to the reason why the connection request is not accepted by the gNB 100B. Further, the same phenomenon occurs in a case where the connection request simply does not reach the gNB 100B.

In this operation example, the UE 200 starts a timer based on a timing at which the gNB 100B (SN) is selected or a timing at which the connection request is transmitted, and in a case where the acceptance of the connection request by the gNB 100B is not detected within the predetermined time described above, the UE 200 determines that the connection request is not accepted by the gNB 100B. In this case, the gNB 100B may drop the connection request.

Further, the success of acceptance of the connection request by the gNB 100B may be determined based on completion of the RA procedure in the SCG (SpCell) or reception of SCG configuration information (configuration).

The UE 200 changes the connection destination target node, specifically, the candidate node for the SN (S340). Specifically, the UE 200 may select another gNB, frequency, cell, BWP, and beam.

Further, the UE 200 transmits a radio link failure (S-RLF) in a cell included in the SCG to the eNB 100A (MN) (S350).

Note that when the UE 200 transmits a new connection request, a predetermined transmission prohibition time (prohibit time) may be provided. The prohibit time can be stored in the UE 200 in advance and set based on the timing at which the gNB 100B (SN) is selected, the timing at which the connection request is transmitted, or a timing at which it is determined that the connection request is not accepted by the gNB 100B. Alternatively, the prohibit time may be notified from the network at a necessary timing.

Furthermore, the prohibit time may be applied only to the gNB, frequency, cell, BWP, and beam used for the transmission of the connection request.

### (3.1.2.2.2) Operation Example 2

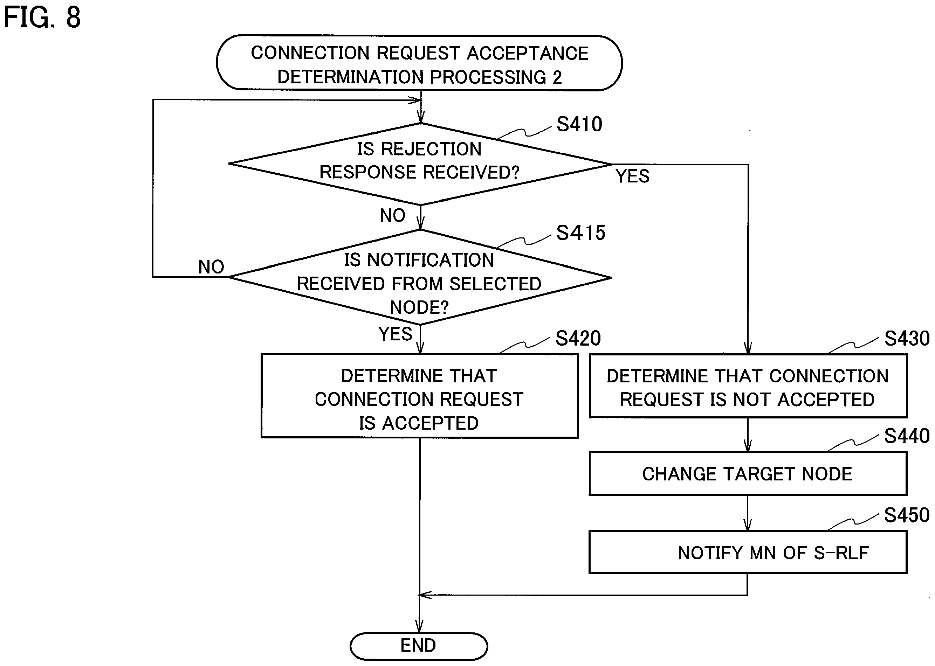

Fig. 8 illustrates a connection request acceptance determination processing flow (Operation Example 2) of the UE 200. As illustrated in Fig. 8, the UE 200 determines whether or not a rejection response from the gNB 100B to the transmitted connection request is received (S410).

In a case where the rejection response is not received, the UE 200 determines whether or not a notification is received from the selected node, that is, the node (gNB 100B) to which the connection request is transmitted (S415).

In a case where the notification is received from the gNB 100B, the UE 200 determines that the connection request is accepted by the gNB 100B (S420).

On the other hand, in a case where the notification is not received from the gNB 100B and the rejection response is received from the gNB 100B, the UE 200 determines that the connection request is not accepted by the gNB 100B (S430).

That is, in this operation example, it is clearly indicated by the rejection response that the gNB 100B rejects the connection request.

Note that the rejection response may be configured as a message in any layer such as a PHY (L1) layer, an MAC layer, a Packet Data Convergence Protocol layer (PDCP), or an RRC layer. In a case of a message in the RRC layer, the message may be transmitted on either DCCH or CCCH. Further, the rejection response may include a reason for rejection.

The processing of S440 and S450 illustrated in Fig. 8 is the same as that of S340 and S350 of Fig. 7. Note that in this operation example, the prohibit time can be set when the UE 200 transmits a new connection request as in Operation Example 1, but the prohibit time may be individually notified at a timing at which the rejection response is transmitted, or may be included in the rejection response.

### (3.1.3) Others

The operation related to the connection request described above may be performed only when there is an instruction, permission or setting from the network.

Further, in a case where there are a plurality of options or conditions, the plurality of options or conditions may be instructed, permitted or set together. Alternatively, the plurality of options or conditions may be specified by a list (for example, a white list or a black list) of true and false.

Further, even in a case where there are a plurality of frequencies (or a frequency range), a plurality of CCs, a plurality of serving cells, a plurality of UL carriers or a plurality of BWPs supported by the UE 200, they may be instructed, permitted, or set together, or individually indicated, permitted, or set.

The operation related to the connection request described above may be performed when the UE 200 is in the following state.

- A Non-MR-DC state
- An MR-DC state (the UE 200 autonomously changes the SpCell)
- A state in which the S-RLF occurs in the MR-DC state Further, when the operation related to the connection request described above is performed in the MR-DC state, old SCG configuration information (configuration) may be dropped at the time of requesting connection. Further, in this case, the SN may be notified of the dropping, or the old SCG configuration information may be dropped upon reception of new SCG configuration information from the network.

In a case where the connection request is repeated multiple times or the like, a different operation among the above-described operation examples may be performed for each connection request.

Further, the UE 200 may notify the network that the above-described operation is possible, as capability information (UE capability). Note that the notification may be in a unit of UE 200, or in a unit of RAT, band combination, frequency band, or BWP.

### (3.2) Addition of SCG on the Initiative of Network

In a case of adding an SCG on the initiative of the network, the connection request to the gNB 100B (SN) is transmitted from the gNB 100B to the UE 200. Hereinafter, a related communication sequence and operation flow of the UE 200 will be described.

### (3.2.1) Communication Sequence

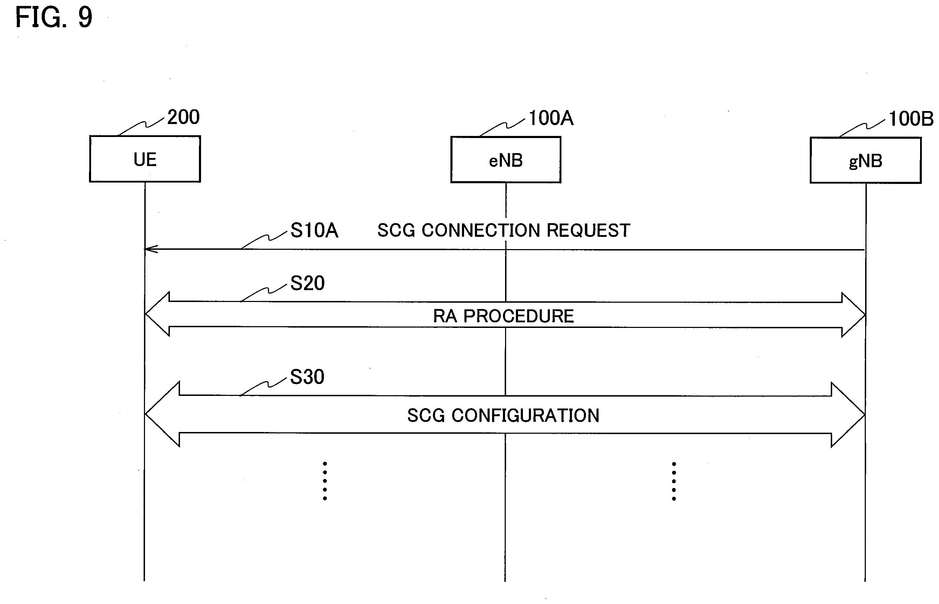

Fig. 9 illustrates a communication sequence related to the addition of SCG on the initiative of the network. In the following, a description will be mainly given of portions different from the communication sequence (see Fig. 4) related to the above-described addition of an SCG on the initiative of the UE 200.

As illustrated in Fig. 9, with the start of the MR-DC by the UE 200, the gNB 100B transmits a connection request (SCG connection request) to the UE 200 to add an SCG (SN) (S10A).

The network instructs the UE 200 in advance to monitor a connection request from a candidate radio base station (in the present embodiment, the gNB 100B) for the SN at a predetermined frequency and time that are candidates for the SCG (SN). The gNB 100B transmits a connection request directly to the UE 200, after the UE 200 is instructed to monitor the connection request.

Such a processing is similar to Discontinuous Reception (DRX) in the SCG. However, since the UE 200 does not retain SCG configuration information (configuration), radio and network resources can be used more efficiently.

Note that the processing of S20 and S30 in Fig. 9 is the same as that in Fig. 4.

### (3.2.2) Operation Flow of UE 200

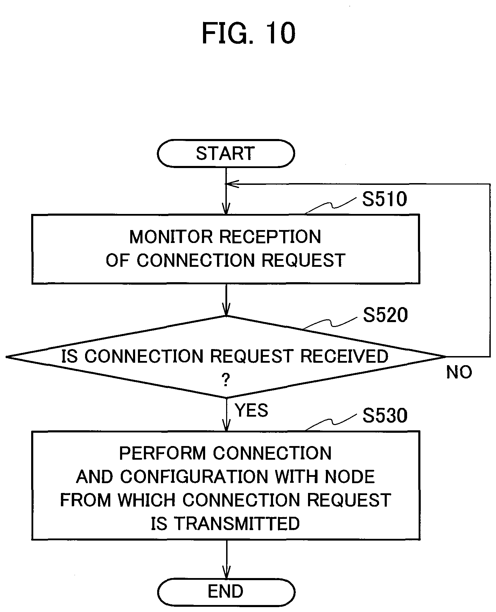

Fig. 10 illustrates an overall operation flow of the UE 200 that is related to the addition of an SCG (SN) on the initiative of the network.

As illustrated in Fig. 10, the UE 200 monitors reception of the connection request to the SN (S510). As described above, the connection request is transmitted using a predetermined resource by the candidate radio base station for the SN, specifically, the gNB 100B.

Specifically, the UE 200 monitors reception of the connection request at a predetermined frequency/time or beam. Further, the connection request may be transmitted as a message in any one of the PHY (L1) layer, the MAC layer, or the RRC layer.

The gNB 100B transmits the connection request by using a gNB, frequency, cell, BWP, and beam that are assumed to be related to reception of the connection request monitored by the UE 200 in a specific event (for example, DL data resuming, UL data resuming (detected by the MN)).

Further, the connection request may include information regarding the gNB to be connected to the UE 200, frequency, cell, BWP, and beam. That is, in a case that the information is not included, connection and configuration with the gNB 100B are performed by using the gNB, frequency, cell, BWP, and beam used for the reception of the connection request.

Note that the state of the UE 200 that monitors the reception of the connection request may be any one of an RRC IDLE state, an INACTIVE state, or a CONNECTED state. Further, a predetermined identifier (for example, RNTI) may be used at the time of the monitoring.

The UE 200 determines whether or not the connection request is received (S520). In a case where the connection request is received, the UE 200 performs connection and configuration with the gNB 100B transmitting the connection request (S530).

Specifically, the UE 200 performs connection and configuration with the gNB 100B based on the gNB, frequency, cell, BWP, and beam used for the transmission of the connection request. Note that details thereof are the same as the SCG addition operation on the initiative of the UE 200.

### (3.2.3) Others

Similarly to the addition of an SCG on the initiative of the UE 200, the operation related to the connection request described above is not limited to the contents described above even in the case of the addition of an SCG in the initiative of the network. See (3.1.3) for details.

In addition, in a case where the addition of an SCG on the initiative of the UE 200 and the addition of an SCG on the initiative of the network occur at the same time, or in a case where the addition of an SCG on the initiative of the network occurs during the SCG addition operation on the initiative of the UE 200, either operation may be given priority.

For example, priority may be given to an operation that occurs earlier or an operation that occurs later, or the addition of an SCG on the initiative of the network may always be given priority. Alternatively, an operation performed in a better wireless environment (communication quality) may be prioritized.

### (4) Action/Effect

According to the above-described embodiment, the following effects can be obtained. Specifically, with the start of the MR-DC, the UE 200 starts connection to the gNB 100B in response to transmission of a connection request (SCG connection request) to the gNB 100B (SN) to the gNB 100B (in a case of the addition of an SCG on the initiative of the UE 200) or reception of a connection request from the gNB 100B (in a case of the addition of an SCG on the initiative of the network).

That is, when adding an SN in the MR-DC, resources of the MCG (LTE) are not used. For this reason, when the SN is added, an amount of signaling in the RRC layer for the MCG does not increase, and transmission and reception of other user plane signals not related to the MR-DC are not adversely affected. As a result, it is possible to suppress degradation of performance of a specific radio access network (E-UTRAN 20) due to the configuration and release of the connection to a node such as the SN.

Moreover, the UE 200 detects rejection of the connection request by the gNB 100B based on the time elapsed from the timing at which the connection request is transmitted, or reception of the rejection response from the gNB 100B to the connection request.

Therefore, even when the connection request directly transmitted to a new node such as the SN is rejected, the connection processing with the new node can be continued.

In the present embodiment, the UE 200 can select a content (an RAT, frequency, capability information of the UE 200, or the like) used for connection to the gNB 100B at the time of performing the MR-DC, and transmit, to the gNB 100B, a connection request to the gNB 100B based on the selected content. Therefore, a probability that the connection to the gNB 100B based on the connection request succeeds can be raised effectively.

In the present embodiment, in a case where the connection request to the gNB 100B is transmitted from the network on the initiative of the network, the UE 200 can cause the receiving unit 220 to monitor a predetermined resource (a frequency, a time, or the like) used to transmit the connection request from the gNB 100B, and when the connection request is received using the predetermined resource, the UE 200 can start the connection to the gNB 100B. Therefore, it is possible to realize a quick and reliable connection to the gNB 100B in response to the connection request from the network.

In the present embodiment, in a case where the UE 200 detects rejection of the transmitted connection request, the UE 200 can transmit a new connection request of which a content is at least partially different from that of the transmitted connection request. Therefore, a probability that the addition of an SN succeeds can be further raised.

In the present embodiment, in a case where the UE 200 detects rejection of the transmitted connection request, the UE 200 can also transmit failure information (S-RLF) indicating a failure of the gNB 100B to the eNB 100A. Therefore, the network can quickly recognize an operation state of the gNB 100B, and can contribute to improvement of service quality of the entire radio communication system 10.

In the present embodiment, the above-described operation is performed for the addition of an SN included in the SCG in the MR-DC. Therefore, when the UE 200 starts the MR-DC, an SN can be added without adversely affecting the MCG.

### (5) Other Embodiments

Although the contents of the present invention have been described with reference to the embodiments, the present invention is not limited to these descriptions, and it is obvious to those skilled in the art that various modifications and improvements can be made.

For example, in the above-described embodiment, the addition of an SN in the MR-DC has been described by way of an example, but a similar operation may be performed when the SN is released. That is, instead of the connection request, the UE 200 may transmit (or receive) an SN release request and start releasing the SN in response to the release request.

In addition, the above-described operation is not limited to the MR-DC, and may also be applied to handover (cell reselection) to another cell (radio base station) by the UE 200, addition of a secondary cell (SCell) in carrier aggregation (CA), addition of a BWP, or the like.

Furthermore, in the above-described embodiment, the UE 200 detects rejection of the connection request by the gNB 100B based on the time elapsed from the timing at which the connection request is transmitted or the reception of the rejection response from the gNB 100B to the connection request. However, "reject" may be read as other words, for example, "failure", "not successfully completed", or "does not satisfy (or satisfies) a specific condition".

Furthermore, in the above-described embodiment, the MR-DC using different radio base stations (the eNB 100A and the gNB 100B) has been described by way of example, but the first node and the second node may be logical nodes and may be configured in the same radio base station (that is, MR-DC in the same radio base station).

In the above-described embodiment, the connection request is transmitted from the UE 200 or the gNB 100B in the non-MR-DC state. However, the connection request may also be transmitted in a case where the UE 200 further adds an SN in the MR-DC state, or the like.

Moreover, the block configuration diagrams (Figs. 2 and 3) used for describing the embodiments illustrates blocks of functional unit. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is called a transmitting unit or a transmitter. For any of the above, as described above, the realization method is not particularly limited to any one method.

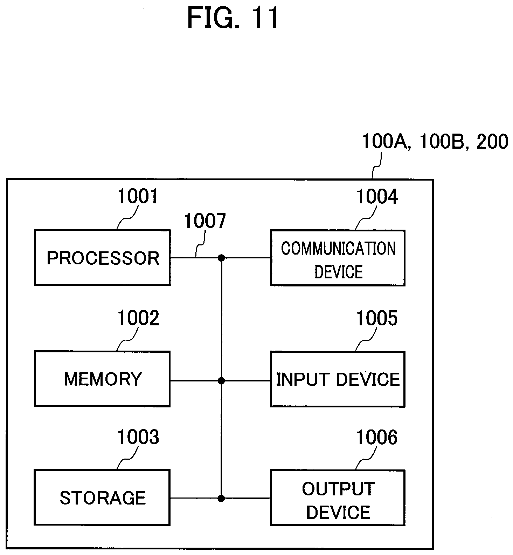

Furthermore, the eNB 100A, the gNB 100B, and the UE 200 (the device) described above may function as a computer that performs the processing of the radio communication method of the present disclosure. Fig. 11 is a diagram illustrating an example of a hardware configuration of the device. As illustrated in Fig. 11, the device may be configured as a computer device including a processor 1001, a memory 1002, a storage 1003, a communication device 1004, an input device 1005, an output device 1006, a bus 1007, and the like.

Furthermore, in the following description, the term "device" can be replaced with a circuit, device, unit, and the like. A hardware configuration of the device may be constituted by including one or plurality of the devices illustrated in the figure, or may be constituted without including some of the devices.

The functional blocks (Figs. 2 and 3) of the device is realized by any of hardware elements of the computer device or a desired combination of the hardware elements.

Moreover, the processor 1001 performs operation by loading a predetermined software (program) on hardware such as the processor 1001 and the memory 1002, controls communication via the communication device 1004, and controls reading and/or writing of data on the memory 1002 and the storage 1003, thereby realizing various functions of the device.

The processor 1001, for example, operates an operating system to control the entire computer. The processor 1001 may be configured with a central processing unit (CPU) including an interface with a peripheral device, a control device, an operation device, a register, and the like.

Moreover, the processor 1001 reads a program (program code), a software module, data, and the like from the storage 1003 and/or the communication device 1004 into the memory 1002, and executes various processing according to the data. As the program, a program that is capable of executing on the computer at least a part of the operation described in the above embodiments is used. Alternatively, various processing described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of Read Only Memory (ROM), Erasable Programmable ROM (EPROM), Electrically Erasable Programmable ROM (EEPROM), Random Access Memory (RAM), and the like. The memory 1002 may be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 may include at least one of an optical disk such as Compact Disc ROM (CD-ROM), a hard disk drive, a flexible disk, a magneto-optical disk (for example, a compact disk, a digital versatile disk, and Blu-ray (Registered Trademark) disk), a smart card, a flash memory (for example, a card, a stick, and a key drive), a floppy (Registered Trademark) disk, a magnetic strip, and the like. The storage 1003 may be called an auxiliary storage device. The recording medium may be, for example, a database including the memory 1002 and/or the storage 1003, a server, or other appropriate media.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 may include a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 may be constituted by a single bus or may be constituted by separate buses between the devices.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by the hardware. For example, the processor 1001 may be implemented by using at least one of these hardware.

Notification of information is not limited to that described in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB), and System Information Block (SIB)), other signals, or a combination thereof. The RRC signaling may be called an RRC message, for example, or may be an RRC Connection Setup message, an RRC Connection Reconfiguration message, or the like.

Each of the above aspects/embodiments may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods described above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal can be performed by at least one of the base station and other network nodes other than the base station (for example, MME, S-GW, and the like may be considered, but not limited thereto). In the above, an example in which there is one network node other than the base station is described; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by a value (0 or 1) represented by one bit or by a Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, and it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (CC) may be referred to as a carrier frequency, a cell, a frequency carrier, or the like.

The terms "system" and "network" used in the present disclosure are used interchangeably.

Furthermore, the information, the parameter, and the like described in the present disclosure may be represented by an absolute value, may be expressed as a relative value from a predetermined value, or may be represented by corresponding other information. For example, the radio resource may be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information elements can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, a communication service can be provided by a base station subsystem (for example, a small base station for indoor use (Remote Radio Head: RRH)).

The term "cell" or "sector" refers to a part or all of the coverage area of a base station and/or a base station subsystem that performs the communication service in this coverage.

In the present disclosure, the terms "mobile station (MS)", "user terminal", "user equipment (UE)", "terminal" and the like can be used interchangeably.

The mobile station may be called by those skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same applies). For example, each of the aspects/embodiments of the present disclosure may be applied to a configuration that allows communication between a base station and a mobile station to be replaced with communication between a plurality of mobile stations (which may be referred to as, for example, Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency region, the microwave region, and the light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles may include a plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: E-UTRAN
- 30: NG RAN
- 100A: eNB
- 100B: gNB
- 110: Transmitting unit
- 120: Receiving unit
- 130: Control unit
- 200: UE
- 210: Transmitting unit
- 220: Receiving unit
- 230: Control unit
- 1001: Processor
- 1002: Memory
- 1003: Storage
- 1004: Communication device
- 1005: Input device
- 1006: Output device
- 1007: Bus

## Claims

1. A user equipment comprising:
a transmitting unit; a receiving unit; and a control unit,
wherein the transmitting unit transmits, to a second node, a connection request to the second node different from a first node to which the user equipment is connected, and
the control unit detects rejection of the connection request by the second node based on a time elapsed from a timing at which the connection request is transmitted, or reception of a rejection response to the connection request, the rejection response being received from the second node by the receiving unit.

2. The user equipment according to claim 1, wherein in a case where the control unit detects the rejection of the connection request, the transmitting unit transmits a new connection request of which a content is at least partially different from that of the connection request.

3. The user equipment according to claim 1, wherein in a case where the control unit detects the rejection of the connection request, the transmitting unit transmits failure information indicating a failure of the second node to the first node.

4. The user equipment according to any one of claims 1 to 3, wherein the user equipment supports dual connectivity in which the user equipment is connected to the first node and the second node, and
the second node is a secondary node included in a secondary cell group.
